# EUROPEAN PATENT APPLICATION

(11) **EP 0 532 351 A2**
(43) Date of publication of application: **17.03.1993**
(21) Application number: 92308302.6
(22) Date of filing: 11.09.1992
(51) Int. Cl.: B23D 25/14, B23P 17/06, E04C 5/01

(54) **Metal fibres and a machine for their manufacture**

(30) Priority: 13.09.1991 ZA 917305; 03.02.1992 ZA 920749
(71) Applicant: Jones, John Albert, Randburg, Transvaal Province (ZA)
(72) Inventor: Jones, John Albert, Randburg, Transvaal Province (ZA)
(74) Representative: Bubb, Antony John Allen

(57) **Abstract**

This invention relates to a machine for manufacturing metal fibres. The machine has a power driven rotatable toothed wheel cutter having a width at least equal to the length of fibre required. The teeth being parallel to the axis of the cutter and there is provided a cutter bed block extending substantially radially from the cutter wheel and a feed mechanism for feeding strip metal of a thickness of the required fibre along the cutter bed block into the path of rotation of the cutter teeth at a speed commensurate with the speed of rotation of the wheel and the width of the fibre required.

## Description

### INTRODUCTION TO THE INVENTION

This invention relates to metal fibres and more particularly to the manufacture of metal fibres which may be used to provide an improved toughness index, impact resistance and flexural strength in cementitious material.

### BACKGROUND OF THE INVENTION

It has been known for more than half a century that the introduction of steel fibres into cementitious mixes greatly increases the toughness index, impact resistance and the flexural strength of the resultant products. The introduction of these fibres increases the costs of production but enables panels and coatings of much thinner dimensions to be used than would be the case without their introduction.

Coatings of cementitious materials are widely used and often applied by guniting or shotcrete processes involving spraying a wet or dry mix of cementitious material onto a matrix. This process is frequently used in underground mining operations to retain loose material in the walls of mine workings.

In circumstances such as these it has been found essential that the cementitious material has a maximum toughness index and flexural strength in order to be properly useful for its purpose. Steel fibres have been added to the cementitious mixture prior to its application to the matrix through a spray gun. The spray gun sets size limitations on the fibres which may be used to reinforce the flexural strength of the mixture and thus the fibres should be accurately made to meet these requirements while also being economical to produce.

Generally the fibres should not be longer than half the diameter of the pipe through which the mixture is delivered. These are factors which are well known to those skilled in the art.

Also encountered with these blasting type applications of fibre reinforced cementitious materials is the problem of "rebound" which results in the material failing to adhere to the matrix.

The effect of the fibres in the cementitious material in which they are used is directly related to the pull-out strength they provide. Thus fibres of non uniform shape along their length and having a large aspect ratio are highly desirable.

Many types of fibres and machines for their manufacture have been proposed but the fibres which have achieved extensive commercial success are limited.

The applicant is aware of several patents which relate to machines including rotating cutters used to cut fibres from steel strip material. The most pertinent to the present invention are Japanese Patent No. 52 57581 and German Patent No. 3307 767 both in the name of Sumitomo Metal Industries Limited. The applicant is not aware of any commercial use of fibres made according to the disclosure of these patents.

These patents disclose rotatable cutters co-operating with a fixed cutter block over which the strip material is fed so that fibres having a width considerably greater than this can be cut. The face of the bed block has corrugated recesses formed therein extending away from the cutting edge.

The applicant has also proposed and built a machine of a similar nature and has found that while fibres which are commercially viable can be made with such a machine, the deformation of the metal into the ribs is not satisfactory and also the speed at which the machine may operate is limited. The cutter teeth must be relieved to allow proper feed of the strip material and this tends to cause a build of heat in the cutter tips. This requires clearances between the rotating and stationary cutters which must allow for expansion. This in turn results in a poor cutting operation. The relieving of the cutter teeth weakened them and, particularly when worn, they tend to chip. The form of fibre produced thus decreases materially with cutter wear which is also accentuated by having thin cutter tips.

Because the deformation of the metal to form ribs across the width of the fibres is effected as the material is cut, the applicant has found that the depth of deformation decreases across the width of the fibre to an extent that even when a fibre of substantially 0.5 mm square cross section was made one longitudinal edge had virtually no ribs. This of course adversely affects the mechanical properties of the fibres produced.

The applicant has surprisingly found that by providing a machine with a flat cutter block and recesses in the radially extending faces of the cutter wheel teeth many advantages can be achieved. Using accurately moulded tungsten carbide inserts which do not have to be relieved production speed can be more than doubled compared to the earlier proposed machines. Heating problems are overcome and the teeth strength can be increased to avoid chipping and providing reduced wear.

Most important the form of the fibre is much improved with very little burring and ribs of constant depth across the full width of the fibre are produced.

Further the applicant has found that overwide strip can be used in his machine by positioning a slitting mechanism between the strip feed assembly and a constraining guide for the strip.

### OBJECT OF THE INVENTION

The object of this invention is to provide a machine for manufacturing fibres which have uniformly good configuration made in a machine using a rotating cutter wheel.

### SUMMARY OF THE INVENTION

According to this invention there is provided a machine for manufacturing metal fibres comprising a power driven rotatable toothed steel cutter, each tooth having a cutting edge and a width at least equal to the length of fibre required, the teeth being parallel to the axis of the cutter, a cutter bed block having a cutting edge with the block extending substantially radially from the cutter wheel and a feed mechanism for feeding strip metal of a thickness of the required fibre along the cutter bed block into the path of rotation of the cutter teeth at a speed commensurate with the speed of rotation of the wheel and the width of the fibre required characterised in that the face of the cutter teeth have spaced recesses formed therein extending from the cutting edge.

Further features of this invention provide for the cutter teeth to be precision moulded and for the recesses to be evenly spaced and of corrugated shape.

This invention also provides for the feed mechanism to comprise a pair of rollers one of which is driven in synchronism with the cutter wheel and a constraining guide extending away from the operative edge of the cutter bed block, for the undriven roller to be adjustable towards and away from the driven roller and resiliently biased towards the latter and for the cutter wheel and feed roller to be positively driven through separate electrical motors operating in synchronism.

Further features of this invention provide for the face of the cutter bed block adjacent its cutting edge to have evenly spaced recesses formed therein across its width, and for the cutter teeth to be formed as inserts into the periphery of the wheel and projecting therefrom with the cutting face inclined forwardly at a small angle to the radius of the wheel at the point of insert with the inserts having only a compensating relieving rake.

Still further features of this invention provide for there to be a plurality of cutter wheels and mechanisms driven in unison and located in side by side relationship, for each feed mechanism to be independently and individually adjustable and for the cutting teeth on adjacent wheels to be offset from each other in the direction of rotation of the wheels.

Still further features of this invention provide for the machine to include between the strip feed assembly and the constraining guide a strip slitting mechanism. This mechanism may be a circular slitter having two slitter wheels which are mounted in the path of travel of the metal strip.

One of the slitter wheels is preferably connected to the driven roller of the feed mechanism. Alternatively, the slitter wheel may be suitably connected to the cutter or feed roller drives or may be driven independantly.

A nibbler type slitter may also be used.

### BRIEF DESCRIPTION OF THE DRAWINGS

These and other features of this invention are described below with reference to the accompanying drawings illustrating one preferred embodiment of the invention.

In the drawings
Figure 1 and 2 are oblique views of the machine;
Figure 3 is a side view of the feed mechanism;
Figure 4 illustrates a metal fibre made by the machine;
Figure 5 illustrates a strip slitting mechanism;
Figure 6 is a detail of the cutting assembly;
Figure 7 a detail of an alternative feed assembly and;
Figure 8 illustrates a cutter wheel insert tooth.

### DETAILED DESCRIPTION OF THE DRAWINGS

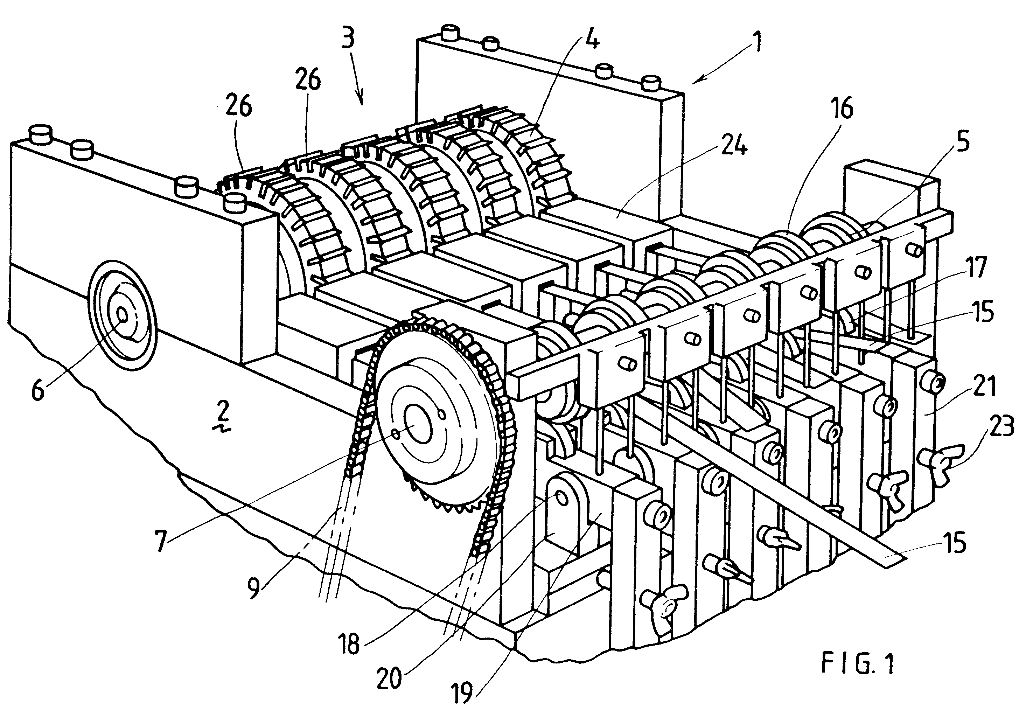

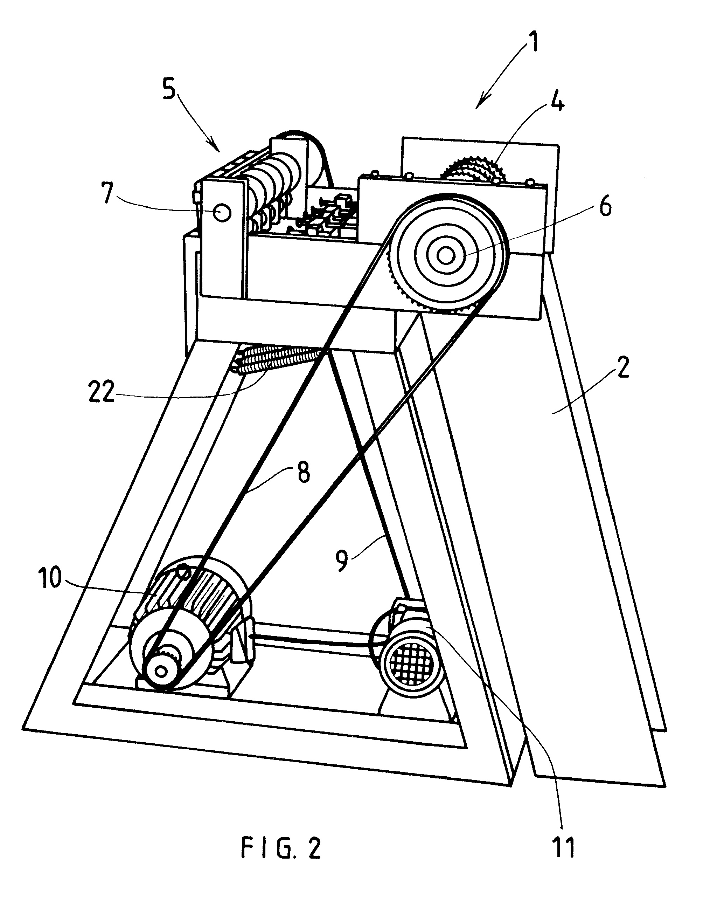

As shown in Figures 1 and 2 a machine (1) for manufacturing steel fibres has a stand (2) supporting a plurality of fibre cutting assemblies (3) arranged in a side by side relationship.

Each assembly consists of a circular toothed cutter wheel (4) and a feed mechanism (5) with all the cutters and the driven rollers (described more fully below) mounted on single shafts (6) and (7).

The shafts (6) and (7) have sprocket and chain drives (8) and (9) to separate electric motors (10) and (11). The motors (10) and (11) are run in synchronism so that the feed will be such that each tooth of each cutter wheel will cut a fibre of predetermined width from a strip of steel (15) fed by the feed mechanism.

It is to be noted that the teeth of the adjacent cutter wheels are offset from each other in the direction of rotation of the wheels so that only one fibre is cut at a time.

This reduces the power required for operation of the machine compared to that which would be necessary if all the cutters cut simultaneously.

The machine illustrated has six cutter wheels and conventionally may have 24 cutting teeth on a wheel diameter of about 150 mm. If the cutters are driven at 900 RPM the machine will produce about 135 000 fibres per minute which is highly economical compared to any other fibre production process known to the Applicant.

The machine enables fibres having a length equal to the width of the cutters or less to be made from strip steel. The thickness of the steel is the thickness of the fibres cut and the width of the fibre is determined by the relationship between cutter speed and feed speed. Preferably the fibres have a substantially square cross section.

Experience has shown that fibres between 20 mm and 40 mm in length and 0.5 mm square in cross section give satisfactory mixing capability in cementitious mixes and also the shape gives a good grip to the cement. This grip may be enhanced in known manner by additives to the cementitious mix such as silica fume or fly ash for example.

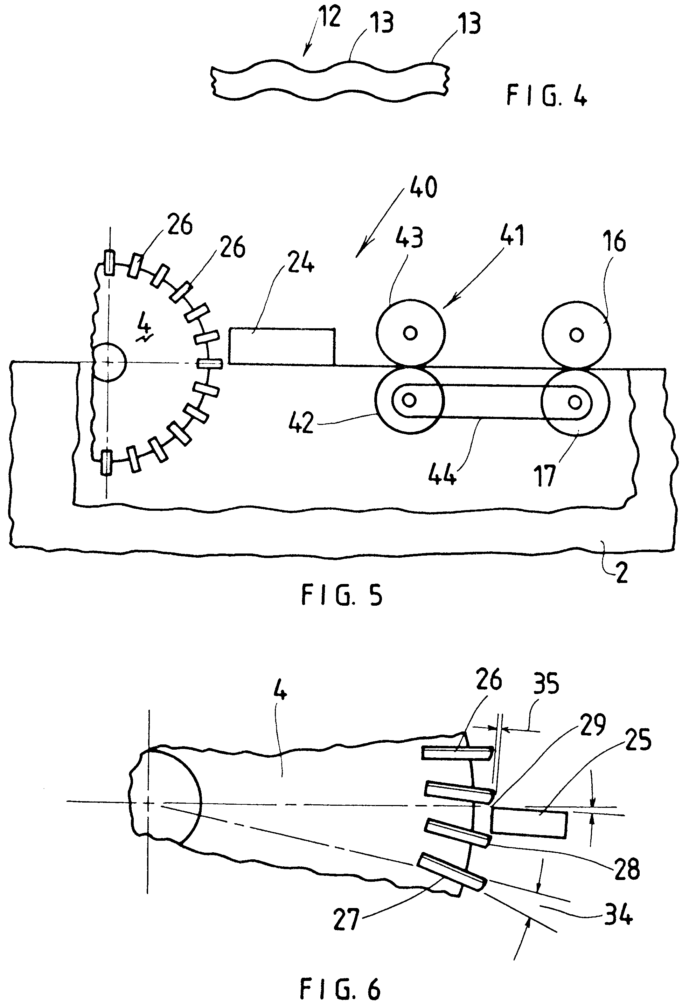

Figure 4 illustrates a typical fibre (12) according to this invention. It will be immediately appreciated that this fibre does not rely only on its square section for its pull out strength characteristic. The fibre illustrated is representative of a 25 mm long fibre and it has nine ribs (13) formed therein equidistantly spaced part at 4 mm distances. The ribs (13) are provided by deforming the fibre transverse to its length an amount equivalent to half the thickness of the fibre. This "roughening" of the fibre along its length greatly enhances the adherence of the cementitious mix and consequently the pull out strength. The manner in which this shaping is automatically achieved is described below.

The deformation of the fibre as described above is made in the direction of the thickness of the fibre material.

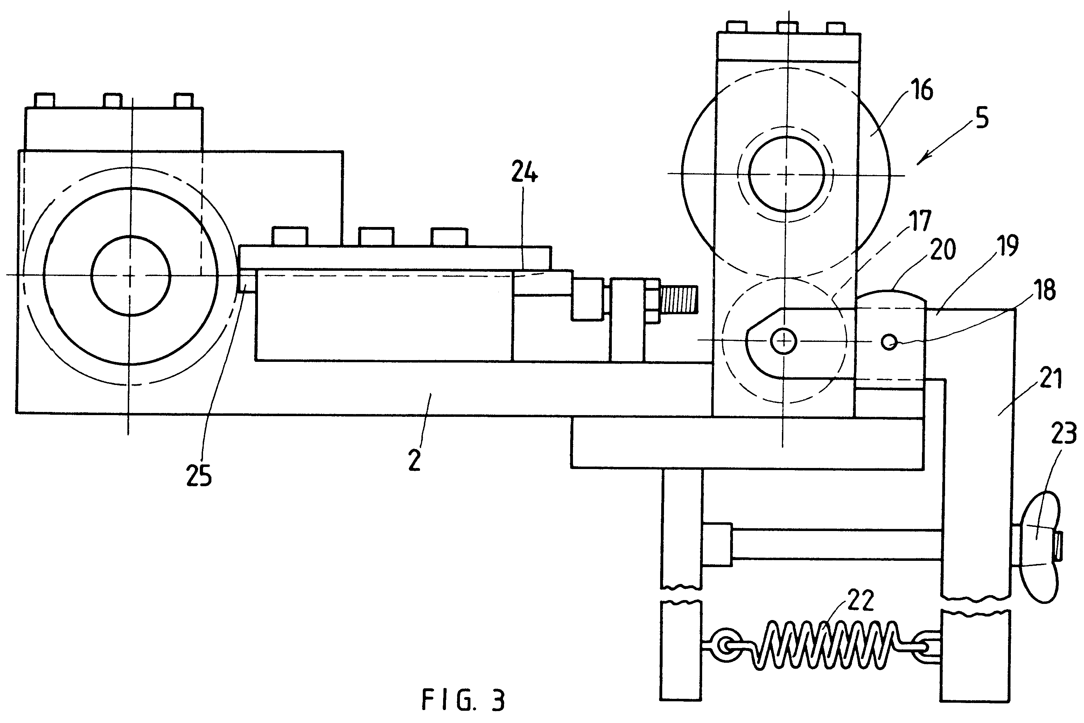

A very convenient feed mechanism 5 for the strip material 15 is illustrated in Figure 1 and Figure 3.

The shaft 7 has fed rollers (16) mounted thereon to rotate in synchronism with the cutter wheels (4) as set out above. The surface of the rollers is serrated to provide a firm drive on the strip (15).

Directly below each feed roller (16) is a co-operating roller (17) rotatable on an independent shaft (not shown) mounted on an arm (19) pivotally supported on a pivot pin (18) in a bifurcated mounting (20) secured in the stand (2). The end of arm (19) remote from roller (17) has a lever (21) secured thereto and conveniently integral therewith. This lever is springloaded by means of tension spring (22) anchored to the frame (2). A simple locking device (23) is provided which prevents unintentional release of the effect of spring (22). The tension that the spring can apply and thus control the pinching on the strip (15) between the feed roller (16) and co-operating roller (17) is preferably adjustable.

The use of an independent feed mechanism (5) for each cutter assembly enables a strip to be fed to a cutter wheel (4) without the necessity to stop either of the drive motors. The locking device (23) is released and the lever (21) moved against effect of spring (22) to move the co-operating roller (17) out of its operative position thus enabling a new strip to be fed into the assembly without any interference with or interruption of the other cutter wheel operations.

The strip (15) is fed through a guide (24) to the cutter wheel (4). This guide (24) constrains any lateral movement of the strip but makes provision for a limited and predetermined buckling of the strip in the direction of its thickness.

The buckling can occur because inspite of the synchronism of the cutter speed and feed the cut through the strip takes a finite time during which the end of the strip at the cutter is held stationary while the feed assemblies continue to feed the strip towards the cutter. When the cut is completed the buckling of the material straightens out under the inherent resilience of the strip and the movement of the cut end is accelerated to bring the strip into the proper position for cutting by the next tooth of the cutter wheel.

Cut material is collected in the stand below the cutters for weighing and packaging and dispatch.

It will be appreciated that because the different strips can be individually controlled the machine can be easily operated by a single operator. Even if one cutter becomes non-functional the machine can produce from the remaining cutters without interruption.

At the forward end of each guide (24) is a cutter bed block (25) associated with each cutter wheel (4).

As shown in Figure 6, each cutter wheel (4) has the cutting teeth (26) provided by inserts of suitably hard precision moulded cutting material such as tungsten carbide. The angle of the surface (27) of the insert which provides the cutting edge (28) is inclined at a small angle (34) to the radial in the forward direction. In practice it has been found that an angle of 8½% is very satisfactory.

Also to enable the fibres produced to be accurately cut there should preferably be a clearance (35) of about 5% of the thickness of the strip being cut. Also the cutting edge (29) of the cutter bed block (25) should be elevated above the radial line at which the cutting edge (28) of the cutting teeth would be closest to the cutter bed block if it were not relieved below its cutting edge. The distance that this edge should be elevated has been found in practice to be about half the thickness of the strip being cut.

Referring back to Figure 4 the fibre illustrated is obtained by having the shape of the cutting edges of the wheel teeth shaped to give the desired configuration to the width of the fibre. In this embodiment the edges of the cutter bed blocks are straight but it is possible for them to have a corrugated or other shape. An example of a cutting tooth (26) is shown in figure (8).

The ribs (13) are formed by having recesses in the under face of the cutter wheel teeth (26). It has been found that the cutting action between cutter wheel (4) of this kind and cutter bed block (25) with a flat upper surface causes deformation of the strip material into the recesses. This forming is facilitated by proving the cutter teeth with a shear angle of 8½°. Thus the ribs (13) are formed automatically with the cutting operation.

The deforming of the piece of strip metal which is to form a fibre is completed before the cutting operation and while the piece is supported across its full width. This has been found to result in full even ribs being provided across the complete width of the fibre.

The fibres need not be of square cross-section and proper deformation can be maintained with considerably wider width fibres.

Referring now to figure 5, part of a machine (40) having a slitting mechanism (41) is shown. The slitting mechanism (41) is a circular slitter having two slitter wheels (42) and (43). The slitter wheels (42) and (43) are dis-alligned for their peripheral edges to be in close proximity in conventional manner.

The slitter wheel (42) is connected by a drive chain (44) to the driven roller (17) of the feed mechanism.

The driven slitter wheel (42) may be directly connected to the cutter or roller drives or may be driven independently. In the latter case an appropriate speed control for the slitters will be included.

It will be appreciated that the slitter (30) may have a plurality of slitter wheels and will also preferably be mounted in a manner which will enable its position to be varied transversely with respect to the path of the strip.

In use when it is desired to produce fibres of a length of say, half the width of the strip available, one slitter will be used.

The strip is fed through the machine and between the slitter wheels (42) and (43).

The split strip continues through the cutter assembly where fibres of half the width of the strip are produced.

The splitting of the strip has been found effective in use and the quality of fibre produced is satisfactory.

Variation in number of slitter wheels enables fibres of appropriate length to be produced from any strip which is over wide for the length of the desired fibre. The splitting mechanism can be used with a variety of metals in strip form.

Generally, it has been found that the machine described above can be best operated when the strip has a hardness of about 70 to 80 on the Rockwell B scale.

Many modifications to the machine above described can be made without departing from the scope of this invention.

For example, the feed mechanism may be different from that described. An electric step motor could be used in synchronisation with the cutter wheel drive and it is also possible but not preferable to cut fibres with a pressure feed and utilise the buckling of the strip described above to feed it stepwise into the cutter.

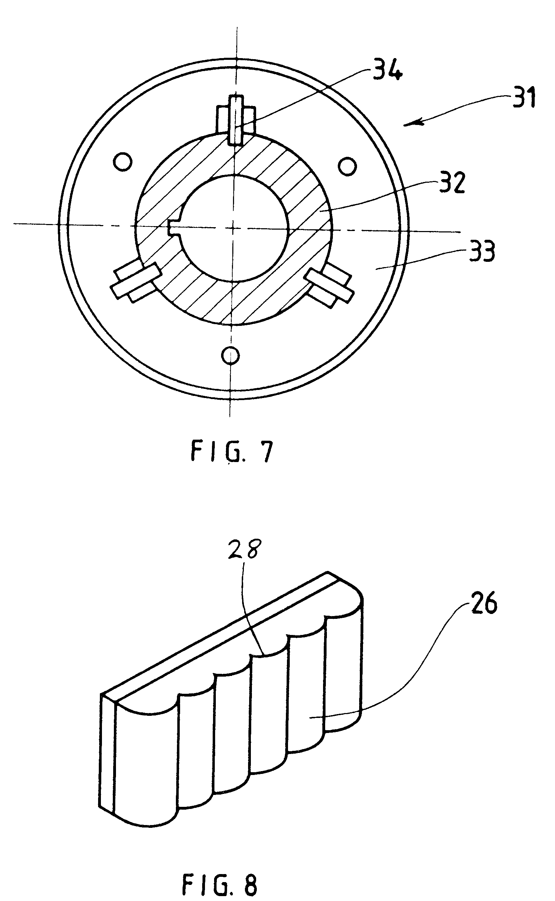

With this type of feed it is also possible to give a further resilience to the feed by means of the feed roller (31) illustrated in Figure 7. In this form the roller (31) comprises a central bush (32) to be secured to the drive shaft and the bush (32) is connected to an outer sleeve (33) by radial leaf springs (34). These leaf springs will deflect and straighten to compensate for relative rotational movement between the bush and sleeve and also to some extent accommodate a stepwise feed of the strip.

Obviously, also the particular cutter teeth and bed block can be varied and result in differently shaped fibres.

The invention provides a machine for manufacturing metal fibres at high speed which is of simple construction and easy to operate without the use of skilled labour.

## Claims

1. A machine (1) for manufacturing metal fibres (12) comprising a power driven rotatable toothed steel cutter (4), each tooth (26) having a cutting edge (28) and a width at least equal to the length of fibre required, the teeth (26) being parallel to the axis (6) of the cutter (4), a cutter bed block (25) having a cutting edge with the block extending substantially radially from the cutter wheel (4) and a feed mechanism (5) for feeding strip metal (15) of a thickness of the required fibre along the cutter bed block (25) into the path of rotation of the cutter teeth (26) at a speed commensurate with the speed of rotation of the wheel (4) and the width of the fibre required characterised in that the face of the cutter teeth (26) have spaced recesses formed therein extending from the cutting edge (28).

2. A machine for manufacturing metal fibres as claimed in claim 1 in which the cutter teeth (26) are precision moulded.

3. A machine for manufacturing metal fibres as claimed in claim 1 or 2 in which the recesses are evenly spaced across the face of the cutter teeth (26).

4. A machine for manufacturing metal fibres as claimed in any one of the preceding claims in which the recesses are of corrugated shape.

5. A machine for manufacturing metal fibres as claimed in any one of the preceding claims in which the feed mechanism (5) comprising a pair of rollers (16, 17) one of which is driven in synchronism with the cutter wheel (4) and a constraining guide (24) extending away from the operative edge of the cutter bed block (25).

6. A machine for manufacturing metal fibres as claimed in claim 5 in which the undriven roller (17) is adjustable towards and away from the driven roller and resiliently biased towards the latter.

7. A machine for manufacturing metal fibres as claimed in claim 6 in which the cutter wheel (4) and feed roller (17) are positively driven through separate electrical motors (10, 11) operating in synchronism.

8. A machine for manufacturing metal fibres as claimed in any one of the preceding claims in which the face of the cutter bed block (25) adjacent its cutting edge (29) has evenly spaced recesses formed therein across its width.

9. A machine for manufacturing metal fibres as claimed in any one of the preceding claims in which the cutter teeth (26) are formed as inserts into the periphery of the wheel (4) and projecting therefrom with the cutting face inclined forwardly at a small angle (34) to the radius of the wheel at the point of insert with the inserts having only a compensating relieving rake.

10. A machine for manufacturing metal fibres as claimed in any one of the preceding claims in which there are a plurality of cutter wheels (4) and mechanisms (5) driven in unison and located in side by side relationship.

11. A machine for manufacturing metal fibres as claimed in claim 10 in which each feed (5) mechanism is independently and individually adjustable.

12. A machine for manufacturing metal fibres as claimed in claim 10 or 11 in which the cutting teeth (26) on adjacent wheels are offset from each other in the direction of rotation of the wheels.

13. A machine for manufacturing metal fibres as claimed in any one of claims 5 to 12 which includes between the strip feed assembly (5) and the constraining guide (24) a strip slitting mechanism (41).

14. A machine for manufacturing metal fibres as claimed in claim 13 in which the strip slitting mechanism (41) is a circular slitter which is mounted in the path of travel of the strip.

15. A machine for manufacturing metal fibres as claimed in claim 14 in which the slitter (41) is driven by the driven roller (17) of the feed mechanism (5).

16. A machine for manufacturing metal fibres as claimed in claim 14 in which the slitter (41) is connected to either the cutter drive (10) or the feed roller drive (11).
